# EUROPEAN PATENT SPECIFICATION

(11) **EP 1 837 962 B1**
(45) Date of publication and mention of the grant of the patent: **18.03.2009**
(21) Application number: 07251194.2
(22) Date of filing: 21.03.2007
(51) Int. Cl.: H01S 3/23, H01S 3/10, B23K 26/06

(54) **Laser beam processing apparatus**
Laser-Materialbearbeitungsvorrichtung
Dispositif d'usinage d'un matériau au laser

(30) Priority: 23.03.2006 JP 2006080529
(43) Date of publication of application: 26.09.2007
(73) Proprietor: Miyachi Corporation, Noda City, Chiba (JP)
(72) Inventor: Yamazaki, Nobuyuki, Miyachi Technos Corporation, Noda-shi, Chiba-ken (JP); Sakae, Kazunori, Miyachi Technos Corporation, Noda-shi, Chiba-ken (JP)
(74) Representative: Makovski, Priscilla Mary

(56) References cited:
- WO-A-98/53949
- WO-A-20/05013445
- JP-A- 2003 046 173
- JP-A- 2005 039 065
- US-A1- 2001 033 597
- US-A1- 2005 211 682
- US-B1- 6 275 250
- US-B1- 6 947 123

## Description

### BACKGROUND OF THE INVENTION

### 1. Field of the Invention

The present invention relates to a laser processing apparatus that applies a laser beam to a workpiece to perform a desired laser process.

### 2. Description of the Related Art

Conventionally, solid laser is frequently used for laser processes such as laser welding and laser marking, and YAG laser is most frequently used. For common solid laser, a block-shaped (typically, rod-shaped) crystal doped with ions of a rare-earth element is used as an active medium; excitation light is applied to a side surface or end surface of the crystal to optically pump or excite the active medium in the crystal; and an optical resonator resonates and amplifies an oscillating beam with a predetermined wavelength emitted axially from the crystal to take out a laser beam. Although lamps were previously used for a light source of the excitation light, semiconductor lasers, i.e., laser diodes (LD) are currently mainly used.

By the way, in the high-precision laser processing field, a completely air-cooled laser processing apparatus supplying high-power single-mode beam is desired from a stand point of a processing ability, processing accuracy, and costs. The single mode is a mode having a circle beam shape and a centrally concentrated power density, has an excellent condensing performance, and is suitable for high-precision processing.

However, in conventional solid lasers, the air-cooled single-mode laser is limited to a level of 10 W or less, and a water-cooled type such as a chiller cooler must be used to achieve higher power. That is, heat radiation due to the air-cooling of the air-cooled type exciting LD easily affects the crystal (active medium), which is disposed near the LD because of the configuration of the optical resonator, and therefore, it is difficult to use a high-power type (e.g., one having an array configuration or stack configuration consisting of a multiplicity of LD elements) that has a large amount of heat radiation. In this regard, the water-cooled type exciting LD has less thermal effect on the crystal even in the case of a high-power type. However, the water-cooled type needs a chiller cooler and the biggest weakness thereof is that the initial cost and running cost are high.

Since a conventional solid laser has low light-light conversion efficiency, if the power of the exciting LD is increased for higher power, the power of the oscillating output laser beam is not correspondingly increased, and instead, loss in the laser oscillator is increased to a higher degree. In the end surface excitation mode that condenses and applies the LD light to the end surface of the crystal (active medium) for optical excitation, an excessive thermal load is applied to the crystal due to the higher power of the exciting LD, and the crystal tends to be damaged and deteriorated. On the other hand, in the side surface excitation mode that applies the LD light to the side surface, although the crystal is less damaged and deteriorated, the beam quality is low, and especially, it is very difficult to obtain a single-mode beam.

As a driving current supplied to the exciting LD is increased for higher power, high-speed/fine current control becomes more difficult, and it becomes more difficult to control the power of the LD light and, therefore, the power of the oscillating output laser beam in accordance with the setting.

The above problems of the conventional technology are notable in a laser marking apparatus with a Q-switch disposed in a laser oscillator. That is, since peak power of a Q-switched pulse laser beam is very high, when higher power is achieved, especially when higher power is achieved in the single mode, expensive laser-resistant optical resonator mirror and Q-switch must be used. It is also problematic that the cost of the laser oscillator is further increased when the Q-switch is also water-cooled and that the peak power is varied (resulting in deterioration of laser processing quality) since stability is reduced in each pulse as the power is increased.

Conventional laser apparatuses for laser processing are disclosed in US 6 275 250 B1 and WO 2005/013 445 A1.

### SUMMARY OF THE INVENTION

The present invention was conceived in view of the above problems of the convention technology and it is therefore an object of the present invention to provide a laser processing apparatus from which a high-power single-mode processing laser beam can easily be acquired.

It is another object of the present invention to provide a laser processing apparatus that realizes highly-efficient, high-power, and highly-stable laser in a completely air-cooled manner.

A laser processing apparatus of the invention is defined in claim 1. Further aspects of the invention are defined in the dependent claims.

To achieve the above objects, a laser processing apparatus of the present invention comprises a seed laser oscillating unit that oscillates and outputs a seed laser beam; an amplifying optical fiber that includes a core containing a predetermined rare-earth element, the amplifying optical fiber introducing the seed laser beam from the seed laser oscillating unit through one end into the core to propagate the seed laser beam to the other end; a fiber core exciting unit that excites the core to amplify the seed laser beam in the core of the amplifying optical fiber; a laser emitting unit that applies to a workpiece a processing laser beam coming out as the amplified seed laser beam from the other end of the amplifying optical fiber; and a laser power measuring unit that measures the laser power of the processing laser beam, a laser power measurement value acquired from the laser power measuring unit being fed back to the seed laser oscillating unit to control the laser power of the seed laser beam.

In the above configuration, while the core of the amplifying optical fiber is excited with the fiber core exciting unit, the seed laser beam generated by the seed laser oscillating unit can be introduced and propagated from one end to the other end to amplify or convert the seed laser beam into a high-power processing laser beam in the core. The processing laser beam taken out from the amplifying optical fiber is applied to a workpiece by the laser emitting unit while the laser power measuring unit measures the laser power of the processing laser beam and feeds back the laser power measurement value to the seed laser oscillating unit. When the seed laser oscillating unit compares the laser power measurement value with a reference value to compensate the laser output of the seed laser beam based on the comparative error, the laser output of the processing laser beam is correspondingly compensated. Since the seed laser oscillating unit can be configured as small-power laser, variable control can rapidly and finely be performed for the laser power of the seed laser beam, and the single-mode seed laser beam can easily be generated with air-cooling specification.

In one aspect of the present invention, the seed laser oscillating unit oscillates and outputs a Q-switched pulse laser beam as the seed laser beam. In this case, the laser emitting unit may include a galvanometer scanner to scan the workpiece with the processing laser beam in a desired pattern.

According to the present invention, in the above Q-switching mode, the seed laser oscillating unit includes an optical resonator consisting of a pair of mirrors in an optically opposing arrangement; a solid active medium disposed on the light path in the optical resonator; an active medium exciting unit that continuously excites the active medium; a Q-switch disposed on the light path in the optical resonator; and a Q-switch driving unit that drives the Q-switch to generate the Q-switched pulse laser beam at a predetermined timing, and the laser power measurement value from the laser power measuring unit is fed back to the active medium exciting unit. In such a configuration, giant pulse oscillation is generated in the optical resonator by the Q-switching, and the Q-switched pulse laser beam having extremely high peak power is taken out as the seed laser beam from the optical resonator.

According to a preferred aspect, the active medium exciting unit includes a first laser diode that outputs a first excitation light in continuous oscillation; a first laser power source unit that drives the first laser diode to emit light; and a first optical lens that condenses and applies the first excitation light oscillated and output by the first laser diode to the active medium. The first laser power source unit controls an electric current value of the drive current to the first laser diode based on the reference value for the laser power of the processing laser beam and the laser power measurement value from the laser power measuring unit. Since the laser power of the seed laser beam may be low in the present invention, the first laser diode may be a small-power type, and the first laser power source unit can drive the first laser diode to emit light with a small drive current. Since the heat radiation amount of the first laser diode is small, an air-cooling mechanism can be downsized. To acquire the single-mode laser beam, preferably, an end surface excitation mode is used and the first excitation light generated by the first laser diode is condensed and made incident on one end surface of the active medium.

In the present invention, the seed laser oscillating unit can be configured to oscillate and output a pulse laser beam that can be controlled in waveform as the seed laser beam. According to a preferred aspect, the seed laser oscillating unit includes an optical resonator consisting of a pair of mirrors in an optically opposing arrangement; a solid active medium disposed on the light path in the optical resonator; and an active medium exciting unit that excites the active medium to generate the pulse laser beam, and the laser power measurement value from the laser power measuring unit is fed back to the active medium exciting unit. In this case, the active medium exciting unit includes a first laser diode that outputs a first excitation light in pulsed oscillation; a first laser power source unit that drives the first laser diode to emit light; and a first optical lens that condenses and applies the first excitation light oscillated and output by the first laser diode to the active medium. The first laser power source unit controls a waveform or peak value of the drive current to the first laser diode based on the reference signal for the laser power waveform of the processing laser beam and the laser power measurement value from the laser power measuring unit.

According to an example, a first cooling unit is included to cool the first laser diode with air cooling. The first cooling unit cools the active medium along with the first laser diode with air cooling. Alternatively, a second cooling unit can be included separately from the first cooling unit to cool the active medium with air cooling.

According to a preferred aspect, the fiber core exciting unit includes a second laser diode that oscillates and outputs a second excitation light in pulsed oscillation or continuous oscillation; a second laser power source unit that drives the second laser diode to emit light; and a transmitting optical fiber for optically coupling the second laser diode with the amplifying optical fiber, and the second excitation light oscillated and output from the second laser diode is made incident on one end surface or the other end surface of the amplifying optical fiber through the transmitting optical fiber. With such a fiber coupling LD excitation mode, the fiber core exciting unit can be disposed in any places, particularly, in a place distant from a processing location and the seed laser oscillating unit.

The second laser diode can also be cooled with air cooling in the fiber core exciting unit. That is, since the effect of heat radiation can be avoided in the seed oscillating unit, if the second laser diode is high-power laser, the second laser diode can be accommodated with the air-cooling mode.

According to the laser processing apparatus of the present invention, with the above configuration, a high-power single-mode processing laser beam can easily be acquired, and highly-efficient, high-power, and highly-stable laser can be realized in a completely air-cooled manner. As a result, laser processing ability and accuracy can be improved and costs can be reduced.

### BRIEF DESCRIPTION OF THE DRAWINGS

The above and other objects, aspects, features and advantages of the present invention will become more apparent from the following detailed description when taken in conjunction with the accompanying drawings, in which:
Fig. 1 is a clock diagram of a configuration of a laser processing apparatus according to one embodiment of the present invention;
Fig. 2 is a waveform diagram of operation of the laser processing apparatus according to the embodiment;
Fig. 3 is a block diagram of a configuration of a laser processing apparatus according to another embodiment; and
Fig. 4 is a waveform diagram of operation of the laser processing apparatus according to the embodiment.

### DESCRIPTION OF THE PREFERRED EMBODIMENTS

Preferred embodiments of the present invention will hereinafter be described with reference to the accompanying drawings.

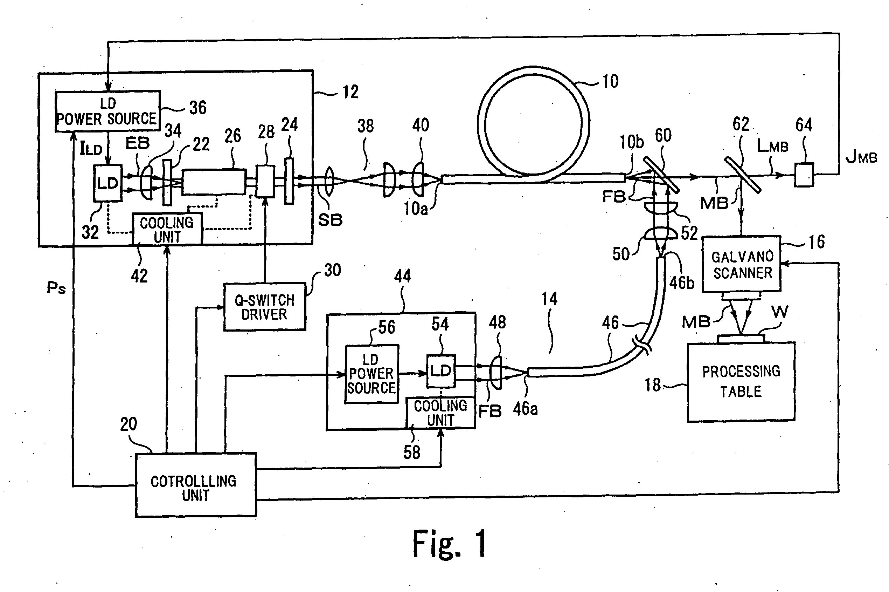

Fig. 1 depicts a configuration of a laser processing apparatus according to one embodiment of the present invention. This laser processing apparatus is configured as a laser marking apparatus and includes an optical fiber for amplification (hereinafter, "amp fiber") 10, a seed laser oscillating unit 12, a fiber core exciting unit 14, a laser emitting unit 16, a processing table 18, a controlling unit 20, a light sensor 64, etc.

Although not shown, the amp fiber 10 includes a core made of, for example, quartz doped with ions of a rare-earth element, for example, ytterbium (Yb), and a clad made of, for example, quartz coaxially surrounding the core; the core is defined as a propagation light path of a seed laser beam SB described later; and the clad is defined as a propagation light path of a core excitation light FB. The amp fiber 10 may be any length, for example, a few meters.

The seed laser oscillating unit 12 is configured as a YAG laser oscillator that oscillates and outputs a Q-switched pulse YAG laser beam (with wavelength of 1064nm), and a YAG rod (active medium) 26 and a Q-switch 28 are disposed in a linear arrangement within the optical resonator consisting of a pair of mirrors 22 and 24 in an optically opposing arrangement. The Q-switch 28 is, for example, an acoustooptical switch and is switched at a predetermined frequency by a Q-switch driver 30 under the control of the controlling unit 20.

The seed laser oscillating unit 12 employs the end surface excitation mode to excite the YAG rod 26. Specifically, a laser diode (LD) 32 is disposed as an excitation light source behind the total reflection mirror 22 of the optical resonator, and an active medium excitation light EB from the excitation LD 32 is condensed by a condensing lens 34 and applied to one end surface of the YAG rod 26. The total reflection mirror 22 has coating non-reflective to the wavelength of the excitation light EB.

The LD 32 is driven to emit light by an LD power source 36, continuously oscillates and outputs a laser beam with a wavelength of 808 nm for the excitation light EB, and continuously and sustainably pumps the YAG rod 26 with the energy of the excitation light EB. When energy is accumulated in the optical resonator by the continuous excitation and the Q-switch 28 is switched, giant pulse oscillation occurs in the optical resonator, and a Q-switched pulse YAG laser beam having extremely high peak power is output from an output mirror 24 of the optical resonator.

The Q-switched pulse YAG laser beam is oscillated and output from the seed laser oscillating unit 12 in this way and is introduced as the seed laser beam SB into the amp fiber 10. Specifically, one end surface 10a of the amp fiber 10 is oppositely disposed at a laser exit port of the seed laser oscillating unit 12 such that the light axes are aligned, and a beam expander 38 and a condensing lens 40 of an incident optical system are disposed therebetween. The Q-switched pulse YAG laser beam from the seed laser oscillating unit 12, i.e., the seed laser beam SB is expanded in beam diameter by the beam expander 38 and is condensed and made incident on the core end surface 10a of the amp fiber 10 through the condensing lens 40.

Since the seed laser beam SB is amplified with a predetermined amplification rate in the amp fiber 10 to generate a processing laser beam MB for a workpiece W in this laser processing apparatus as described later, the laser power (effective value) of the seed laser beam SB can be set to a very low value (e.g., on the order of 1 W), and correspondingly, the seed laser oscillating unit 12 can be configured as a small-power solid laser, and especially, a small-power (e.g., on the order of 2 W) LD can be used for the excitation light source 32.

Since the seed laser oscillating unit 12 is a small-power YAG laser and employs the end surface excitation mode as above, the single-mode seed laser beam SB can easily be acquired. A cooling unit 42 for increasing stability of laser oscillation and stability of single mode can be configured in the air-cooled type. Since the LD 32 is small-power, the heat radiation thereof is very unlikely to affect the YAG rod 26.

Although not shown, the cooling unit 42 is configured by a Peltier device thermally coupled to parts to be cooled, a radiator, an air-cooling fan, etc., and adjusts the cooling target parts to a constant temperature under the control of the controlling unit 20. Although the cooling target parts must include the LD 32, the YAG rod 26 and the Q-switch 28 may not be included in the cooling target parts since the thermal load and the heat generation amount are low. Alternatively, the seed laser oscillating unit 12 can entirely or partially be mounted on a thermally conductive common base member to cool each unit with a common cooling mechanism through the common base member.

In any case, the air-cooling specification works sufficiently and the water-cooled system such as a chiller cooler is not necessary. Therefore, the water-cooled high-RF-power type may not be used for the Q-switch 28 and the Q-switch driver 30. An expensive mirror with high laser resistance (less burnout in the coating film) may not be used for the optical resonator mirrors 22 and 24. Since the thermal stress is generally small in the seed laser oscillating unit 12, a small inexpensive part can be used for each unit.

The fiber core exciting unit 14 employs a so-called fiber coupling LD configuration and includes an LD unit 44, an optical fiber for transmission (hereinafter, "transmission fiber") 46, and optical lenses 48, 50, and 52. The LD unit 44 can be disposed in any places, particularly, in a place distant from the seed laser oscillating unit 12 and the laser emitting unit 16 (processing location), and includes a laser diode (LD) 54 that continuously oscillates and outputs the core excitation laser beam FB with a wavelength of 980 nm, an LD power source 56 that drives the LD 54 to emit light, an air-cooled type cooling unit 58 that cools the LD 54, etc. The operations of the LD power source 56 and the cooling unit 58 are controlled by the controlling unit 20.

Since the LD 54 generates the core excitation light FB with relatively large power, for example, on the order of 50 W to 80 W, the LD 54 employs a relatively large-scale array configuration or stack configuration including a multiplicity of LD elements in a one-dimensional or two-dimensional arrangement. Although not shown, the cooling unit 58 includes a Peltier device thermally coupled to the LD54, a radiator, an air-cooling fan, etc., is a relatively large-scale air-cooling mechanism for cooling the above relatively large-scale LD 54, and has a large amount of heat radiation. However, since the cooling unit 58 is away from the seed laser oscillating unit 12, the heat radiation from the cooling unit 58 does not affect the seed laser oscillating unit 12 (especially, the YAG rod 26, which is the active medium).

The excitation light FB emitted from the LD 54 is condensed and made incident on one end surface 46a of the transmission fiber 46 through the condensing lens 48. The transmission fiber 46 is, for example, a SI (step-index) fiber and transmits the core excitation light FB taken in from the LD unit 44 to near the other end of the amp fiber 10.

A surface 46b of the other end of the transmission fiber 46 is optically coupled to a surface 10b of the other end of the amp fiber 10 through the collimator lens 50, the condensing lens 52, and a turn-back mirror 60. The turn-back mirror 60 is disposed with a predetermined angle or orientation at a position where the light axis of the end surface 46b of the transmission fiber 46 intersects with the light axis of the end surface 10b of the amp fiber 10, and is coated with a film reflective to the wavelength of the core excitation light FB and a film non-reflective to the wavelength of the processing laser beam MB. The core excitation light FB emitted from the end surface 46b of the transmission fiber 46 is collimated into parallel light by the collimator lens 50, is condensed by the condensing lens 52, and is made incident on the end surface 10b of the amp fiber 10 by bending the light path at a right angle with the turn-back mirror 60.

Into the amp fiber 10, the Q-switched pulse seed laser beam SB from the seed laser oscillating unit 12 enters through one end surface 10a and the continuously oscillated core excitation light FB from the fiber core exciting unit 14 enters through the other end surface 10b as above. The seed laser beam SB is axially propagated toward the other end surface 10b of the fiber while confined by the total reflection on the boundary surface between the core and the clad. On the other hand, the core excitation light FB is axially propagated through the amp fiber 10 while confined by the total reflection on the outer circumferential surface of the clad, and passes through the core many times during the propagation to optically excite Yb ions in the core. The seed laser beam SB is amplified to have a laser power (average power), for example, on the order of 30 W in the activated core during the propagation through the amp fiber 10 and comes out as the high-power processing laser beam MB from the other end surface 10b of the amp fiber 10. Of course the processing laser beam MB is a YAG laser beam having the same wavelength (1064 nm) as the seed laser beam SB.

Since the amp fiber 10 confines the seed laser beam SB in the elongated core having a diameter on the order of 10 µm and a length on the order of a few meters, the processing laser beam MB with a small beam diameter and small beam spread angle can be taken out. Since the core excitation light FB made incident on the end surface 10 b of the amp fiber 10 passes through the core many times during the propagation through the long light path to exhaust the excitation energy, the low-power (e.g., 1 W) seed laser beam SB can be amplified to the high-power (e.g., 30 W) processing laser beam MB with very high efficiency.

Since the core of the amp fiber 10 does not cause the thermal lens effect, a beam mode is very stable and special cooling is not needed. Therefore, the single mode of the seed laser beam SB can stably be maintained and amplified in the amp fiber 10 to acquire the single-mode processing laser beam MB.

The core excitation FB exhausts almost all the laser energy in the amp fiber 10 and comes out from one end surface of the amp fiber 10 with light intensity considerably attenuated. To laterally deviate the used core excitation light FB after passing through the amp fiber 10, a turn-back mirror (not shown) may obliquely be disposed on the light path of the incident optical systems 38 and 40.

The Q-switched pulse processing laser beam MB comes out from the end surface 10b of the amp fiber 10 on the light axis as above, is transmitted straight through the turn-back mirror 60, and enters into the laser emitting unit 16 after the light path is changed by a bent mirror 64, for example.

The laser emitting unit 16 is equipped with a galvanometer scanner, fθ lens, etc. The galvanometer scanner includes a pair of movable mirrors that enable oscillating movement in two orthogonal directions, and controls directions of the both movable mirrors to predetermined angles in synchronization with the Q-switching operation of the seed laser oscillating unit 12 under the control of the controlling unit 20 to condense and apply the Q-switched pulse processing laser beam MB from the amp fiber 10 to a desired position on a surface of the workpiece W on the processing table 18. Although the marking process performed on the surface of the workpiece W typically is a process of drawing characters, graphics, etc., a surface removal process such as trimming can also be performed.

In this embodiment, the light sensor 64 is disposed, for example, near or behind a bent mirror 62 to measure the laser power of the Q-switched pulse processing laser beam MB. The light sensor 64 includes, for example, a photoelectric transducer consisting of a photodiode and receives leaked light L_{MB} at the back of the bent mirror 62 to generate an electric signal (laser power detection value) J_{MB} representing the laser power (e.g., peak power or average power) of the processing laser beam MB. The laser power detection value J_{MB} acquired from the light sensor 64 is sent to the LD power source 36 of the seed laser oscillating unit 12.

The LD power source 36 receives a setting value Pₛ for the laser power of the processing laser beam MB as a reference value of feedback control from the controlling unit 20 and receives the laser power detection value J_{MB} as a feedback returned signal from the light sensor 64. Both P_{S} and J_{MB} are compared for each Q-switched pulse to obtain an error, and a drive current I_{LD} for the LD 32 is controlled such that the error approaches zero in the next Q-switching.

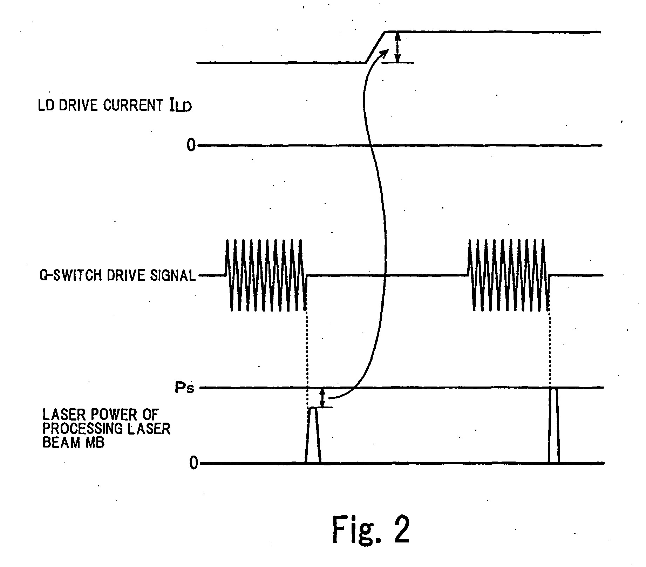

For example, as shown in Fig. 2, if the laser power detection value J_{MB} is lower than the setting value P_{S} for one Q-switched pulse, an electric current value of the LD drive current (constant current) I_{LD} is increased in accordance with the magnitude of the error. The LD 32 is a small-power LD having the small drive current I_{LD}, which can arbitrarily and variably be controlled at a high response speed. That is, if the Q-switch frequency is considerably high, the feedback control can be performed for the Q-switching operation of each cycle with a sufficient margin. When the drive current I_{LD} is suitably increased, the laser power becomes somewhat higher than the previous time in the seed laser beam SB generated by the next Q-switching, and the laser power of the corresponding processing laser beam MB also becomes somewhat higher than the previous time and approaches the reference value Pₛ.

In this way, the light sensor 64 feeds back the laser power of the processing laser beam MB to the LD power source 36 for each Q-switched pulse, and the LD power source 36 rapidly and variably controls the drive current I_{LD} to the small-power LD 32 in response to this feedback to apply negative feedback compensation to the laser power of the seed laser beam SB in the next Q-switching. The negative feedback compensation is also applied to the laser power of the high-power processing laser beam MB taken out from the amp fiber 10 in accordance with the seed laser beam SB, and the laser power and laser energy of each pulse are stabilized near the setting value. The laser processing quality (particularly, processing ability and processing accuracy) can considerably be increased by such stabilization of the laser power and laser energy in combination with the above single mode.

Although the preferred embodiment of the present invention has been described, the above embodiment does not limit the present invention. Those skilled in the art can make various modifications and changes without departing from the technical concept and the technical scope of the present invention in specific embodiments.

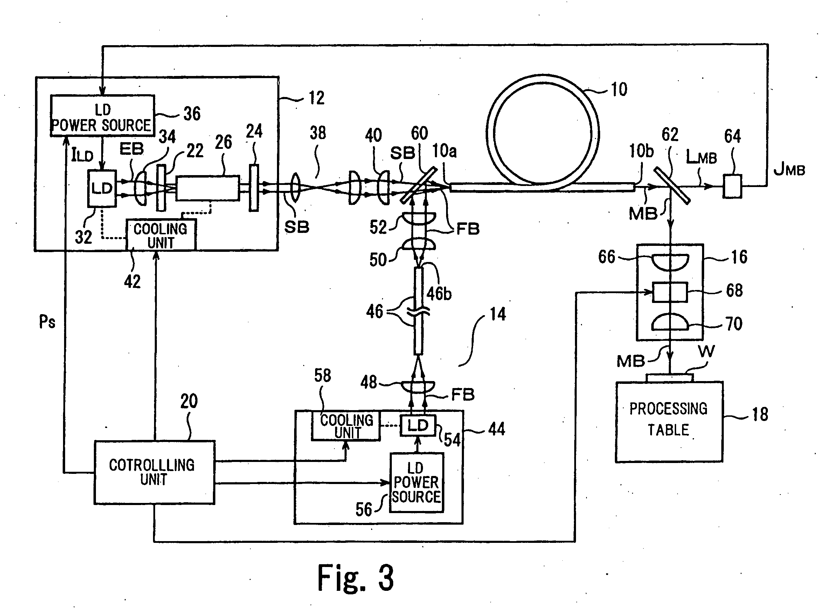

For example, although the above embodiment relates to the laser processing apparatus of the Q-switching mode, the present invention does not limited to the Q-switching mode. For example, as shown in Fig. 3, the Q-switch 28 may be omitted in the seed laser oscillating unit 12. In this apparatus configuration, the drive current I_{LD} supplied to the excitation LD 32 is also controlled to an arbitrary pulse waveform by the LD power supply 36 under the control of the controlling unit 20 to allow the seed laser oscillating unit 12 to generate a pulse laser beam as the seed laser beam SB and, consequently, the pulse laser beam can be taken out from the amp fiber 10 as the processing laser beam MB. In this case, the light sensor 64 may also measure the laser power of the processing laser beam MB for each pulse to feed back the laser power measurement value J_{MB} to the LD power source 36.

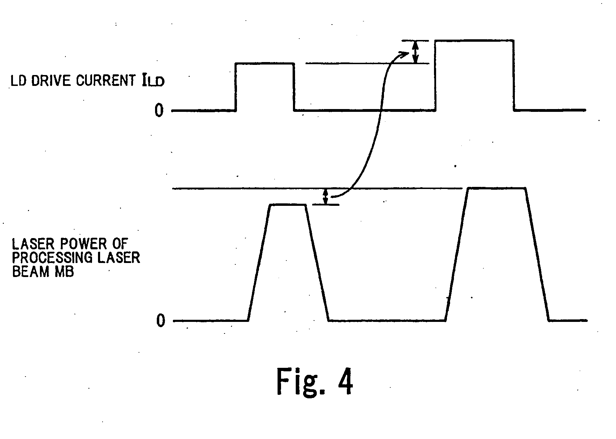

For example, as shown in Fig. 4, if the laser power detection value J_{MB} is lower than the setting value Pₛ for one pulse, an electric current value of the LD drive current (constant current) I_{LD} is increased in accordance with the magnitude of the error. In this case, since the LD 32 is a small-power LD, the LD power source 36 can rapidly and finely perform the waveform control of the pulse drive current I_{LD}. In this way, the seed laser oscillating unit 12 oscillates and outputs the seed laser beam SB with a pulse waveform corresponding to the drive current I_{LD} having a pulse waveform compensated by the feedback control, and the processing laser beam MB having a pulse waveform corresponding to the seed laser beam SB is taken out from the amp fiber 10. The pulsed processing laser beam MB can be generated as above and used for various laser processes without using the Q-switch.

Particularly, for a laser process with large heat input to a workpiece such as laser welding, it is generally preferable to use a pulse laser beam of normal pulses or long pulses, which have a pulse width of 0.1 ms or more. In this case, the long-pulsed pulse current having an arbitrary waveform is used for the LD drive current I_{LD} to generate the long-pulsed seed laser beam SB corresponding to the long-pulsed drive current I_{LD} with the seed laser oscillating unit 12; the long-pulsed processing laser beam MB corresponding to the seed laser beam SB is taken out from the amp fiber 10; and the long-pulsed processing laser beam MB can be applied to the workpiece W to perform desired laser welding. In such a long pulse mode, the laser power measurement value J_{MB} acquired by the light sensor 64 can be fed back to the LD power source 36 to perform the waveform control of the drive current I_{LD} and, therefore, the waveform control of the processing laser beam MB in real time. If the seed laser oscillating unit 12 singly or intermittently generates the seed laser beam SB, the fiber core exciting unit 14 may be synchronized to singly or intermittently generate the core excitation light FB.

As shown in Fig. 3, the laser emitting unit 16 can be configured in a fixed emission type (non-scanning type) consisting of a collimator lens 66, a shutter 68, and a condensing lens 70, instead of a scanning mechanism consisting of the galvanometer scanner and the fθ lens. The processing table 18 can be disposed with an XY table mechanism, an elevating mechanism, a θ-rotation mechanism, etc.

As shown in Fig. 3, the fiber core exciting unit 14 can be optically coupled to one end surface 10a of the amp fiber 10 in common with the seed laser oscillating unit 12. In this case, the turn-back mirror 60 is disposed between the condensing lens 40 for the seed laser beam SB and one end surface 10a of the amp fiber 10. The seed laser beam SB from the seed laser oscillating unit 12 is expanded in beam diameter by the beam expander 38, condensed by the condensing lens 40, is transmitted straight through the turn-back mirror 60, and is condensed and made incident on the core end surface 10a of the amp fiber 10. On the other hand, the core excitation light FB emitted from the end surface 46b of the transmission fiber 46 is collimated into parallel light by the collimator lens 50, is condensed by the condensing lens 52, and is made incident on the end surface 10a of the amp fiber 10 by bending the light path at a right angle with the turn-back mirror 60. The operation of each beam such as propagation and amplification in the amp fiber 10 is substantially the same as the above embodiment, and the high-power processing laser beam MB is also taken out from the other end 10b of the amp fiber 10.

Although the YAG laser is used for the seed laser oscillating unit 12 in the above embodiment, lasers in other forms or modes can also be used, and waveforms can arbitrarily be selected for the seed laser beam and excitation light. Although the laser processing apparatus of the above embodiment is completely air-cooled, the apparatus can partially be water-cooled.

While the illustrative and presently preferred embodiments of the present invention have been described in detail herein, it is to be understood that the inventive concepts may be otherwise variously embodied and employed and that the appended claims are intended to be construed to include such variations except insofar as limited by the prior art.

## Claims

1. A laser processing apparatus comprising:
a seed laser oscillating unit (12) that oscillates and outputs a seed laser beam (SB);
an amplifying optical fiber (10) that includes a core containing a predetermined rare-earth element, the amplifying optical fiber (10) introducing the seed laser beam from the seed laser oscillating unit (12) through one end into the core to propagate the seed laser beam to the other end;
a fiber core exciting unit (14) that excites the core to amplify the seed laser beam in the core of the amplifying optical fiber (10),
a laser emitting unit (18) that emits a processing laser beam (MB) taken out as the amplified seed laser beam from the other end of the amplifying optical fiber (10); and
a laser power measuring unit (64) that measures the laser power of the processing laser beam,
a laser power measurement value acquired from the laser power measuring unit (64) being fed back to the seed laser oscillating unit (12) to control the laser power of the seed laser beam, the laser processing apparatus being **characterised in that** the seed laser oscillating unit (12) includes:
an optical resonator consisting of a pair of mirrors (22, 24) in an optically opposing arrangement;
a solid active medium (26) disposed on the light path in the optical resonator (22, 24);
an active medium exciting unit (32, 36, 38) that continuously excites the active medium (26);
a Q-switch (28) disposed on the light path in the optical resonator (22, 24); and
a Q-switch driving unit (30) that drives the Q-switch (28) to generate the Q-switched pulse laser beam at a predetermined timing, and wherein the laser power measurement value from the laser power measuring unit (64) is fed back to the active medium exciting unit (32, 36, 38).

2. The laser processing apparatus of claim 1, wherein the core is made of quartz doped with ytterbium (Yb).

3. The laser processing apparatus of claim 1 or 2, wherein the seed laser oscillating unit (12) oscillates and outputs a Q-switched pulse laser beam as the seed laser beam.

4. The laser processing apparatus of claim 1, wherein
the active medium exciting unit includes:
a first laser diode (32) that outputs a first, excitation light (EB) in continuous oscillation;
a first laser power source unit (36) that drives the first laser diode (32) to emit light; and
a first optical lens (34) that condenses and applies the first excitation light (EB) oscillated and output by the first laser diode (32) to the active medium (26) and wherein
the first laser power source unit (36) controls an electric current value of the drive current to the first laser diode (32) based on the reference value for the laser power of the processing laser beam (MB) and the laser power measurement value from the laser power measuring unit (64).

5. The laser processing apparatus of claim 4, wherein the first optical lens (34) condenses and applies the first excitation light (EB) to one end surface of the active medium (26).

6. The laser processing apparatus of any one of claim 3 to 5, wherein the laser emitting unit (18) includes a galvanometer scanner for scanning the workpiece with the processing laser beam (MB) in a desired pattern.

7. The laser processing apparatus of claim 1 or 2, wherein the laser emitting unit (18) oscillates and outputs a pulse laser beam that can be controlled in waveform as the seed laser beam (SB)

8. The laser processing apparatus of claim 7, wherein
the seed laser oscillating unit (12) includes:
an optical resonator consisting of a pair of mirrors (22, 24), in an optically opposing arrangement;
a solid active medium (26) disposed on the light path in the optical resonator; and
an active medium exciting unit (32, 36, 38) that excites the active medium to generate the pulse laser beam, and wherein
the laser power measurement value from the laser power measuring unit (14) fed back to the active medium exciting unit.

9. The laser processing apparatus of claim 8, wherein
the active medium exciting unit (26) includes:
a first laser diode (32) that outputs a first excitation light in pulsed oscillation;
a first laser power source unit (36) that drives the first laser diode to emit light; and
a first optical lens (34) that condenses and applies the first excitation light oscillated and output by the first laser diode to the active medium (26) and wherein
the first laser power source unit (36) controls a waveform or peak value of the drive current to the first laser diode (32) based on the reference signal for the laser power waveform of the processing laser beam and the laser power measurement value from the laser power measuring unit (64).

10. The laser processing apparatus of any one of claims 1 to 9, wherein
the fiber core exciting unit (14) includes:
a second laser diode (44) that oscillates and outputs a second excitation light in pulsed oscillation or continuous oscillation;
a second laser power source unit (56) that drives the second laser diode (44) to emit light; and
a transmitting optical fiber (46) for optically coupling the second laser diode with the amplifying optical fiber (10), and wherein
the second excitation light oscillated and output from the second laser diode (44) is made incident on one end surface or the other end surface of the amplifying optical fiber (10) through the transmitting optical fiber (46).

## Patentansprüche

1. Laserbearbeitungsvorrichtung, welche aufweist:
eine Seed-Laser-Oszillationseinheit (12), die oszilliert und einen Seed-Laserstrahl (SB) ausgibt;
eine verstärkende optische Faser (10), die einen Kern enthaltend ein vorbestimmtes Seltene-Erde-Element enthält, welche verstärkende optische Faser (10) den Seed-Laserstrahl von der Seed-Laser-Oszillationseinheit (12) durch ein Ende in den Kern einführt, um den Seed-Laserstrahl zu dem anderen Ende weiterzuleiten;
eine Faserkern-Anregungseinheit (14), die den Kern anregt, um den Seed-Laserstrahl in dem Kern der verstärkenden optischen Faser (10) zu verstärken;
eine Laseremissionseinheit (18), die einen Bearbeitungslaserstrahl (MB) emittiert, der als der verstärkte Seed-Laserstrahl von dem anderen Ende der verstärkenden optischen Faser (10) herausgenommen wird; und
eine Laserenergie-Messeinheit (64), die die Laserenergie des Bearbeitungslaserstrahls misst, wobei ein von der Laserenergie-Messeinheit (64) erhaltener Laserenergie-Messwert zu der Seed-Laser-Oszillationseinheit (12) zurückgeführt wird, um die Laserenergie des Seed-Laserstrahls zu steuern, welche Laserbearbeitungsvorrichtung **dadurch gekennzeichnet ist, dass** die Seed-Laser-Oszillationseinheit (12) enthält:
einen optischen Resonator bestehend aus einem Paar von Spiegeln (22, 24) in einer optisch gegenüberliegenden Anordnung;
ein aktives Festkörpermedium (26), das in dem Lichtpfad in dem optischen Resonator (22, 24) angeordnet ist;
eine Anregungseinheit (32, 36, 38) für das aktive Medium, die kontinuierlich das aktive Medium (26) anregt;
einen Q-Schalter (28), der in dem Lichtpfad in dem optischen Resonator (22, 24) angeordnet ist; und
eine Q-Schalter-Antriebseinheit (30), die den Q-Schalter (28) antreibt, um den Q-geschalteten Impulslaserstrahl mit einem vorbestimmten Takt zu erzeugen, und wobei der Laserenergie-Messwert von der Laserenergie-Messeinheit (64) zu der Anregungseinheit (32, 36, 38) für das aktive Medium zurückgeführt wird.

2. Laserbearbeitungsvorrichtung nach Anspruch 1, bei der der Kern aus mit Ytterbium (Yb) dotiertem Quarz besteht.

3. Laserbearbeitungsvorrichtung nach Anspruch 1 oder 2, bei der die Seed-Laser-Oszillationseinheit (12) oszilliert und einen Q-geschalteten Impulslaserstrahl als das Seed-Laserstrahl ausgibt.

4. Laserbearbeitungsvorrichtung nach Anspruch 1, bei der
die Anregungseinheit für das aktive Medium enthält:
eine erste Laserdiode (32), die ein erstes Anregungslicht (EB) in kontinuierlicher Oszillation ausgibt;
eine erste Laserleistungs-Quelleneinheit (36), die die erste Laserdiode (32) treibt, um Licht zu emittieren; und
eine erste optische Linse (34), die das oszillierte und von der ersten Laserdiode (32) ausgegebene erste Anregungslicht (EB) kondensiert und zu dem aktiven Medium (26) führt, und wobei
die erste Laserleistungs-Quelleneinheit (36) einen elektrischen Stromwert des Treiberstroms zu der ersten Laserdiode (32) auf der Grundlage des-Bezugswerts für die Laserenergie des Bearbeitungslaserstrahls (MB) und des Laserenergie-Messwerts von der Laserenergie-Messeinheit (64) steuert.

5. Laserbearbeitungsvorrichtung nach Anspruch 4, bei der die erste optische Linse (34) das erste Anregungslicht (EB) kondensiert und zu einer Endfläche des aktiven Mediums (26) führt.

6. Laserbearbeitungsvorrichtung nach einem der Ansprüche 3 bis 5, bei der die Laseremissionseinheit (18) eine Galvanometerabtastvorrichtung zum Abtasten des Werkstücks mit dem Bearbeitungslaserstrahl (MB) in einem gewünschten Muster enthält.

7. Laserbearbeitungsvorrichtung nach Anspruch 1 oder 2, bei der die Laseremissionseinheit (18) oszilliert und einen Impulslaserstrahl ausgibt, der in der Wellenform als der Seed-Laserstrahl (SB) gesteuert werden kann.

8. Laserbearbeitungsvorrichtung nach Anspruch 7, bei der
die Seed-Laser-Oszillationseinheit (12) enthält:
einen optischen Resonator bestehend aus einem Paar von Spiegeln (22, 24) in einer optisch gegenüberliegenden Anordnung;
ein aktives Festkörpermedium (26), das sich in dem Lichtpfad in dem optischen Resonator befindet; und
eine Anregungseinheit (32, 36, 38) für das aktive Medium, die das aktive Medium anregt, um den Impulslaserstrahl zu erzeugen, und wobei
der Laserenergie-Messwert von der Laserenergie-Messeinheit (14) zu der Anregungseinheit für das aktive Medium zurückgeführt wird.

9. Laserbearbeitungsvorrichtung nach Anspruch 8, bei der
die Anregungseinheit (26) für das aktive Medium enthält:
eine erste Laserdiode (32), die ein erstes Anregungslicht in gepulster Oszillation ausgibt; eine erste Laserleistungs-Quelleneinheit (36), die die erste Laserdiode treibt, um Licht zu emittieren; und
eine erste optische Linse (34), die das oszillierte und von der ersten Laserdiode ausgegebene erste Anregungslicht kondensiert und zu dem aktiven Medium (26) führt, und wobei
die erste Laserleistungs-Quelleneinheit (36) eine Wellenform oder einen Spitzenwert des Treiberstroms zu der ersten Laserdiode (32) auf der Grundlage des Bezugssignals für die Laserenergie-Wellenform des Bearbeitungslaserstrahls und des Laserenergie-Messwerts von der Laserenergie-Messeinheit (64) steuert.

10. Laserbearbeitungsvorrichtung nach einem der Ansprüche 1 bis 5, bei der
die Faserkern-Anregungseinheit (14) enthält:
eine zweite Laserdiode (44), die oszilliert und ein zweites Anregungslicht in gepulster Oszillation oder kontinuierlicher Oszillation ausgibt; eine zweite Laserleistungs-Quelleneinheit (56), die die zweite Laserdiode (44) treibt, um Licht zu emittieren; und
eine optische Übertragungsfaser (46) zum optischen Koppeln der zweiten Laserdiode mit der verstärkenden optischen Faser (10), und wobei das oszillierte und von der zweiten Laserdiode (44) ausgegebene zweite Anregungslicht auf eine Endfläche oder die andere Endfläche der verstärkenden optischen Faser (10) durch die optische Übertragungsfaser (46) auftrifft.

## Revendications

1. Appareil de traitement au laser comprenant :
une unité d'oscillation laser d'ensemencement (12) qui fait osciller et produit en sortie un faisceau laser d'ensemencement (SB) ;
une fibre optique d'amplification (10) qui comprend un coeur contenant un élément de terre rare prédéterminé, la fibre optique d'amplification (10) introduisant le faisceau laser d'ensemencement provenant de l'unité d'oscillation laser d'ensemencement (12) à travers une extrémité dans le coeur pour propager le faisceau laser d'ensemencement vers l'autre extrémité ;
une unité d'excitation de coeur de fibre (14) qui excite le coeur pour amplifier le faisceau laser d'ensemencement dans le coeur de la fibre optique d'amplification (10),
une unité d'émission laser (18) qui émet un faisceau laser de traitement (MB) qui sort en tant que faisceau laser d'ensemencement amplifié de l'autre extrémité de la fibre optique d'amplification (10) ; et
une unité de mesure de puissance laser (64) qui mesure la puissance laser du faisceau laser de traitement,
une valeur de mesure de puissance laser acquise par l'unité de mesure de puissance laser (64) étant renvoyée vers l'unité d'oscillation laser d'ensemencement (12) pour contrôler la puissance laser du faisceau laser d'ensemencement, l'appareil de traitement au laser étant **caractérisé en ce que** l'unité d'oscillation laser d'ensemencement (12) comprend :
un résonateur optique constitué d'une paire de miroirs (22, 24) selon un agencement optiquement opposé ;
un support actif solide (26) disposé sur le trajet de la lumière dans le résonateur optique (22, 24) ;
une unité d'excitation de support actif (32, 36, 38) qui excite en continu le support actif (26) ;
un Q-switch (28) disposé sur le trajet de la lumière dans le résonateur optique (22, 24) ; et
une unité de commande de Q-switch (30) qui commande le Q-switch (28) pour générer le faisceau laser à impulsion déclenchée à un cadencement prédéterminé, et dans lequel la valeur de mesure de puissance laser provenant de l'unité de mesure de puissance laser (64) est renvoyée vers l'unité d'excitation de support actif (32, 36, 38).

2. Appareil de traitement au laser selon la revendication 1, dans lequel le coeur est constitué de quartz dopé à l'ytterbium (Yb).

3. Appareil de traitement au laser selon la revendication 1 ou 2, dans lequel l'unité d'oscillation laser d'ensemencement (12) fait osciller et produit en sortie un faisceau laser à impulsion déclenchée en tant que faisceau laser d'ensemencement.

4. Appareil de traitement au laser selon la revendication 1, dans lequel l'unité d'excitation de support actif comprend :
une première diode laser (32) qui produit en sortie une première lumière d'excitation (EB) en oscillation continue ;
une première unité de source de puissance laser (36) qui commande la première diode laser (32) pour émettre de la lumière ; et
une première lentille optique (34) qui condense et applique la première lumière d'excitation (EB) oscillée et produite en sortie par la première diode laser (32) sur le support actif (26) et dans lequel
la première unité de source de puissance laser (36) contrôle une valeur de courant électrique du courant de commande vers la première diode laser (32) en se basant sur la valeur de référence pour la puissance laser du faisceau laser de traitement (MB) et la valeur de mesure de puissance laser provenant de l'unité de mesure de puissance laser (64).

5. Appareil de traitement au laser selon la revendication 4, dans lequel la première lentille optique (34) condense et applique la première lumière d'excitation (EB) sur une surface d'extrémité du support actif (26).

6. Appareil de traitement au laser selon l'une quelconque des revendications 3 à 5, dans lequel l'unité d'émission laser (18) comprend un scanner à galvanomètre pour balayer la pièce à travailler avec le faisceau laser de traitement (MB) selon un motif souhaité.

7. Appareil de traitement au laser selon la revendication 1 ou 2, dans lequel l'unité d'émission laser (18) fait osciller et produit en sortie un faisceau laser à impulsions dont la forme d'onde peut être contrôlée en tant que faisceau laser d'ensemencement (SB).

8. Appareil de traitement au laser selon la revendication 7, dans lequel
l'unité d'oscillation laser d'ensemencement (12) comprend :
un résonateur optique constitué d'une paire de miroirs (22, 24) selon un agencement optiquement opposé ;
un support actif solide (26) disposé sur le trajet de la lumière dans le résonateur optique ; et
une unité d'excitation de support actif (32, 36, 38) qui excite le support actif pour générer le faisceau laser à impulsions, et dans lequel
la valeur de mesure de puissance laser provenant de l'unité de mesure de puissance laser (14) est renvoyée vers l'unité d'excitation de support actif.

9. Appareil de traitement au laser selon la revendication 8, dans lequel
l'unité d'excitation de support actif (26) comprend :
une première diode laser (32) qui produit en sortie une première lumière d'excitation en oscillation pulsée ;
une première unité de source de puissance laser (36) qui commande la première diode laser pour émettre de la lumière ; et
une première lentille optique (34) qui condense et applique la première lumière d'excitation oscillée et produite en sortie par la première diode laser sur le support actif (26) et dans lequel
la première unité de source de puissance laser (36) contrôle une forme d'onde ou une valeur de crête du courant de commande vers la première-diode laser (32) en se basant sur le signal de référence pour la forme d'onde de puissance laser du faisceau laser de traitement et la valeur de mesure de puissance laser provenant de l'unité de mesure de puissance laser (64).

10. Appareil de traitement au laser selon l'une quelconque des revendications 1 à 9, dans lequel
l'unité d'excitation du coeur de la fibre (14) comprend :
une seconde diode laser (44) qui fait osciller et produit en sortie une seconde lumière d'excitation en oscillation pulsée ou en oscillation continue ;
une seconde unité de source de puissance laser (56) qui commande la seconde diode laser (44) pour émettre de la lumière ; et
une fibre optique de transmission (46) pour coupler optiquement la seconde diode laser à la fibre optique d'amplification (10), et dans lequel
la seconde lumière d'excitation mise en oscillation et produite en sortie par la seconde diode laser (44) est rendue incidente sur une surface d'extrémité ou l'autre surface d'extrémité de la fibre optique d'amplification (10) par l'intermédiaire de la fibre optique de transmission (46).
